(19)

Europäisches
Patentamt

European
Patent Office

Office européen
des brevets

(11) **EP 3 128 299 B1**

(12) **EUROPÄISCHE PATENTSCHRIFT**

(45) Veröffentlichungstag und Bekanntmachung des Hinweises auf die Patenterteilung:
**18.11.2020  Patentblatt 2020/47**

(51) Int Cl.:
*G01G 19/08* *(2006.01)*        *B60D 1/24* *(2006.01)*
*B62D 59/04* *(2006.01)*

(21) Anmeldenummer: **16180855.5**

(22) Anmeldetag: **22.07.2016**

(54) **ANTRIEBSSYSTEM FÜR ANHÄNGER MIT INTEGRIERTER WIEGEFUNKTION**

DRIVE SYSTEM FOR TRAILERS WITH INTEGRATED WEIGHING FUNCTION

SYSTÈME D'ENTRAINEMENT POUR REMORQUE COMPRENANT UNE FONCTION DE PESÉE INTEGRÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.08.2015   DE 102015113033**

(43) Veröffentlichungstag der Anmeldung:
**08.02.2017   Patentblatt 2017/06**

(73) Patentinhaber: **Truma Gerätetechnik GmbH & Co. KG**
**85640 Putzbrunn (DE)**

(72) Erfinder:
• **Achatz, Dieter**
  **81827 München (DE)**
• **Wegmann, Philipp**
  **81541 München (DE)**

• **Müller, Jochen**
  **85665 Moosach (DE)**
• **Wehle, Alexander**
  **87665 Mauerstetten (DE)**
• **Strohldreier, Eilhard**
  **83043 Bad Aibling (DE)**
• **Schmoll, Andreas**
  **85630 Grasbrunn-Neukeferloh (DE)**
• **Postu, Alin**
  **85521 Ottobrunn (DE)**

(74) Vertreter: **Prinz & Partner mbB**
**Patent- und Rechtsanwälte**
**Rundfunkplatz 2**
**80335 München (DE)**

(56) Entgegenhaltungen:
**EP-A2- 2 169 364     US-A1- 2007 193 795**

EP 3 128 299 B1

**Beschreibung**

Die Erfindung betrifft ein Antriebssystem für einen Anhänger, insbesondere für einen Wohnwagen, mit dem das Gewicht des Anhängers bestimmt werden kann. Die Erfindung betrifft zudem mobile Messstrecken zur Verwendung mit dem Antriebssystem.

Bei einem Anhänger, insbesondere einem Wohnwagen, ist die verfügbare Zuladung innerhalb des zulässigen Gesamtgewichtes des Anhängers ein wichtiges Kriterium. Die aus der Leermasse und dem zulässigen Gesamtgewicht resultierende Zuladung kann unter Umständen recht gering sein, beispielsweise unterhalb von 200 kg. Selbst bei möglicher Auflastung sind oft nur Zuladungen im Bereich zwischen 300 kg und 400 kg zulässig.

Für Wohnwagenbenutzer ist es wünschenswert, den Wohnwagen bis an sein zulässiges Gesamtgewicht beladen zu können. Zur Vermeidung von Geldbußen ist es allerdings wichtig, das Gesamtgewicht vor Reiseantritt zu bestimmen, um sicherzustellen, dass es innerhalb des zulässigen Gesamtgewichts liegt. Die Messtoleranz des Messsystems sollte dabei 3% nicht überschreiten, damit die gesetzlich zugestandene Messtoleranz in möglichst vielen Ländern sicher eingehalten werden kann. Die derzeit verfügbaren Messmethoden sind jedoch sehr begrenzt.

Wohnwagenanhänger können bislang, z.B. bei Reiseantritt, nur auf einer festinstallierten Waage gewogen werden, wie man sie sehr häufig bei Kieswerken oder Mülldeponien findet. Das bedeutet aber für den Nutzer eventuell erhebliche Umwege und im Falle von Übergewicht eine erneute Rückkehr zum Wohnort. Zudem kann das Gewicht am Urlaubsort nur schwer bestimmt werden. Die Notwendigkeit besteht jedoch, da bereits nach einem größeren Einkauf der Wohnwagen schnell überladen sein kann.

Alternativ sind derzeit auf dem Campingmarkt Waagen erhältlich, mit deren Hilfe sowohl das Wohnwagengewicht als auch das Fahrzeuggewicht bestimmt werden kann. Allerdings haben diese Waagen mehrere Nachteile. So muss der Untergrund ein fester, ebener Boden sein, um eine optimale Auflagefläche der Sensoren zu gewährleisten. Es muss zudem eine ausgleichende Holzplatte beim nicht zu messenden Rad untergelegt werden, um eine Schwerpunktsverlagerung zu vermeiden. Ebenfalls nachteilig ist der Messungsablauf. So muss bei der Messung die Waage vor den Reifen gelegt werden. Danach muss sehr langsam über die Waage hinweg gefahren werden. Bei diesem Ablauf wird der Maximalwert des Gewichts gespeichert. Diese langsame Fahrt kann in angehängtem Zustand nur mit deutlich schleifender Kupplung realisiert werden. So kommt es oft zu Fehlmessungen, die deutlich über der 3% Toleranzgrenze liegen. Zudem wird das System nur zum Wiegen des Wohnwagens gebraucht und benötigt auf einer Urlaubsfahrt unnötigen Stauraum.

Es sind Rangierantriebe bekannt, die dazu dienen, einen Anhänger, beispielsweise einen Wohnwagen, dann mittels Hilfskraft rangieren zu können, wenn er nicht an eine Zugmaschine angekoppelt ist. Hierzu weisen übliche Rangierantriebe zwei Antriebseinheiten auf, die den Rädern auf den beiden Seiten des Anhängers zugeordnet sind und diese antreiben können, sowie eine Steuerung und eine Energieversorgung. Bei schweren, 2-achsigen Anhängern können derzeit bis zu vier Antriebseinheiten eingesetzt werden.

Solche Antriebseinheiten enthalten einen Antriebsmotor, dem eine Motorsteuerung zugeordnet ist, ein Getriebe und eine Antriebsrolle. Im Ausgangszustand, also wenn der Rangierantrieb nicht benötigt wird, befindet sich die Antriebsrolle im Abstand von der Lauffläche des Rades, dem sie zugeordnet ist. Wenn der Rangierantrieb eingesetzt werden soll, wird die Antriebsrolle mit der Lauffläche in Eingriff gebracht, so dass eine Drehung des Antriebsmotors dazu führt, dass sich auch das entsprechende Rad des Anhängers dreht.

Die Steuerung dient dazu, die Antriebsmotoren anzusteuern und die Antriebseinheiten zu aktivieren, so dass der Eingriff zwischen der Antriebsrolle und dem entsprechenden Rad des Anhängers hergestellt wird.

Als Energieversorgung wird üblicherweise eine aufladbare Batterie verwendet, welche die elektrische Energie bereitstellt, mit der die Antriebsmotoren, z.B. bürstenlose Elektromotoren, versorgt werden.

Es ist wünschenswert, ein Messsystem zu schaffen, das kein zusätzliches Gewicht benötigt, weil es auf bereits vorhandene Komponenten zurückgreifen kann. Zudem sollte das System dem Nutzer jederzeit und ortsunabhängig zur Verfügung stehen. Da in sehr vielen Wohnwagen inzwischen ein Rangiersystem serienmäßig verbaut oder nachgerüstet wird, kann dieses die Grundlage für ein neues Messsystem bilden.

Die US 2007/0193795 beschreibt einen Anhänger mit einem Motor, der die Räder des Anhängers antreibt. Dabei ist ein Lastsensor vorgesehen, der ein Signal als Rückmeldung hinsichtlich einer Last zwischen einem Zugfahrzeug und dem Anhänger liefern kann.

Die EP 2 169 364 beschreibt ein Verfahren und eine Messeinheit zur Bestimmung eines Gesamtgewichts eines Fahrzeugs. Dabei wird das Fahrzeuggewicht anhand einer auf die Räder des Fahrzeugs wirkenden Umfangskraft berechnet. Bei der Berechnung können auch Lenkkräfte berücksichtigt werden.

Eine Aufgabe der Erfindung liegt deshalb in der Bereitstellung eines Antriebssystems mit einer Wiegefunktion für einen Anhänger. Eine weitere Aufgabe liegt in der Bereitstellung einer Messstrecke zur Verwendung mit dem Antriebssystem, die eine ortsunabhängige Messung erlaubt.

Zur Lösung der oben genannten Aufgaben wird erfindungsgemäß ein Antriebssystem mit Wiegefunktion gemäß Anspruch 1 sowie eine mobile Messstrecke gemäß Anspruch 11 bereitgestellt. Bevorzugte Ausführungsformen sind in den abhängigen Ansprüchen formuliert.

Die Erfindung basiert auf dem Konzept, die Gewichtskraft, die auf die Räder eines Anhängers wirkt, indirekt über die Stromaufnahme der antreibenden Motoren zu bestimmen. Dazu fährt der Wohnwagen zunächst eine erste Strecke ab, die als näherungsweise eben angenommen wird, und der Strombedarf des Motors in der Ebene wird ermittelt. Danach wird eine zweite, schräg ansteigende Strecke abgefahren, beispielsweise ein Keil mit bekannter Steigung abgefahren und der Strombedarf des Motors an der Steigung ermittelt. Selbst wenn die erste und die zweite Strecke sich nicht auf einer waagrechten Unterlagen befinden, ist der bekannte Unterschied zwischen der Steigung der ersten und der zweiten Strecke ausreichend, um aus dem Unterschied der Stromaufnahme der Antriebsmotoren auf der ersten und der zweiten Strecke das Gewicht des Anhängers zu bestimmen.

Zur Berechnung der Masse des Anhängers sind lediglich Messdaten zur Phasenstromaufnahme, notwendig. Das erfindungsgemäße Messsystem kommt somit mit einem Minimum an Messdaten aus. Dies ist sehr vorteilhaft, da so nur wenige Sensoren in das System eingebunden werden müssen.

Um die Genauigkeit der Messung zu erhöhen, können auch Sensoren zur Erfassung der aktuellen Drehzahl des Motors und/oder der Temperatur in einem Chip auf der Platine der Motorsteuerung vorgesehen sein.

Durch die Verwendung spezieller Daten und Bereitstellung einer mobilen Messstrecke schafft die Erfindung ein zuverlässiges Messsystem zur Massenbestimmung bei Anhängern auf Grundlage elektrischer Antriebssysteme mit einer Genauigkeit von ± 3%, insbesondere für einachsige Anhänger, das ortsunabhängig verwendet werden kann und eine einfache Bedienung beinhaltet.

Erfindungsgemäß umfasst dass Antriebssystem eine Steuerung und für jede Seite des Anhängers mindestens eine Antriebsvorrichtung mit einem Gleichstrommotor, der die Räder des Anhängers antreiben kann, Vorrichtungen zur Ermittlung der Temperatur, Drehzahl und Stromaufnahme der Motoren sowie ein Modul zur Berechnung der Masse des Anhängers anhand der ermittelten Stromaufnahme der Motoren unter Berücksichtigung der Drehzahl und Temperatur.

Rangiersysteme für Anhänger mit elektrischen Antriebsmotoren, wie Gleichstrommotoren, sind bekannt. Vorzugsweise wird das erfindungsgemäße Antriebssystem mit bürstenlosen Gleichstrommotoren betrieben.

Es kann auf der Rückseite der Motoren eine Sicherheitsbremse vorgesehen sein. Diese dient dem Feststellen des Antriebsstranges. Zunächst bremst der Motor das System ab, danach fällt die Bremse ein und hält das System. Dadurch kann der Anhänger an einer Steigung gehalten werden. Diese Bremse wird von der Steuerung angesteuert und ist im stromlosen Zustand geschlossen.

Die Ansteuerung des Motors und der ggfls. vorhandenen Bremse übernimmt ebenfalls die Steuerung. Zur Übertragung der Kraft des Motors auf das Rad dient ein Getriebe, an dessen Abtriebsseite eine Antriebsrolle befestigt ist. Damit das Antriebssystem während des Zugbetriebs nicht in Kontakt mit dem Reifen steht, kann es mit einem Hilfsmotors und einer Spindel vom Reifen an- und abgeschwenkt werden. Durch eine Unterkonstruktion wird das System am Anhänger befestigt.

Das System verfügt über Mittel, wie Hallsensoren, zur Erfassung der Rotation des Rotors des Motors. Im Rotor befindet sich ein Element, um die Drehzahl des Motors zu bestimmen. In einer konkreten Ausführung werden die Magnete direkt als Schaltelemente der Hallsensoren genutzt. Durch die Auswertung der Sensoren und der pulsmäßigen Ansteuerung der Wicklungen kann der Motor in der Drehzahl variiert und überwacht werden.

Des Weiteren verfügt das Antriebssystem über Mittel zur Messung der Motortemperatur, wie Thermoelemente, sowie Mittel zur Messung des Stroms- bzw. Phasenstroms. In einer bevorzugten Ausführungsform weist das System zusätzlich einen Neigungssensor zur Ermittlung der Neigung des Anhängers auf.

Auf einer Seite des Motors befindet sich, verbunden über eine Kupplung, das Getriebe. Am Abtrieb des Getriebes sitzt, beispielsweise mittels Passfeder, die Antriebsrolle, die mit Hilfe des Hilfsmotors gegen das Anhängerrad gepresst werden kann.

Das Antriebssystem der Erfindung weist neben Vorrichtungen zur Messung der Temperatur, Drehzahl und Stromaufnahme als wesentliches Merkmal ein Modul zur Berechnung der Masse anhand der gesammelten Daten auf. In einer bevorzugten Ausführungsform ist das Modul neben der Auswertung der Daten auch zur Steuerung einer Messung geeignet. In einer Ausführungsform ist das Modul dazu geeignet:

- die Räder des Anhängers bei einer vorgegebenen Drehzahl mittels der Antriebsmotoren entlang einer Messstrecke umfassend eine ebene Strecke und einen Auffahrtskeil mit bekannter Steigung anzutreiben

- die Drehzahl, Temperatur und Stromaufnahme der Motoren während der Fahrt zu messen

- gegebenenfalls die Neigung des Anhängers zu ermitteln

- die Masse des Anhängers anhand der Differenz zwischen der bei Fahrt entlang der Ebene gemessenen Stromaufnahme und der bei Fahrt entlang des Keils gemessenen Stromaufnahme unter Berücksichtigung der gemessenen Drehzahl und Temperatur sowie gegebenenfalls der Neigung des Anhängers zu berechnen.

Es hat sich außerdem gezeigt, dass gewisse Faktoren bei einer Messung maßgeblich die Genauigkeit des Messergebnisses beeinflussen können und deshalb zur Einhaltung der Toleranzgrenze bei der Berechnung berücksichtigt werden müssen. Deshalb ist das Modul vorzugsweise geeignet zur Berechnung der Masse des Anhängers die folgende Formel I zu verwenden, in der eine Kompensation der Temperatur der Motoren, der unterschiedlichen Reifendurchmesser an der Antriebsrolle und an der Straße, sowie gegebenenfalls der Schwerpunktsverlagerung des Anhängers vorgenommen wird:

$$m = \frac{(I_{Keil} - I_{Ebene}) * (k_1 + (T - 25) * k_{Temp}) * i * \eta * k_{Reifen}}{g * \sin\alpha * r} + m_{Winkel}$$

(Formel I)

wobei m die berechnete Masse des Anhängers ist, $I_{Keil}$ die Stromaufnahme des Motors bei Keilfahrt ist, $I_{Ebene}$ die Stromaufnahme des Motors bei Fahrt entlang des ebenen Abschnitts ist, $k_1$ die Drehmomentkonstante des Motors ist, T die Temperatur des Motors ist, $k_{Temp}$ die Temperaturkonstante des Motors ist, i die Übersetzung des Getriebes ist, $\eta$ der Wirkungsgrad des Getriebes ist, $k_{Reifen}$ die Reifenkonstante ist, g die Normalbeschleunigung ist, $\alpha$ der Winkel des Keils ist und r der Radius der Antriebsrolle ist.

$I_{Keil}$, $I_{Ebene}$ und T werden bei einer Messung gemessen. $k_1$, $k_{Temp}$, i, $\eta$, $k_{Reifen}$ und r sind im Modul hinterlegt. Der Winkel $\alpha$ wird vom Anwender eingegeben. Er ist vom Winkel des Auffahrkeils abhängig und kann passend eingestellt werden. $m_{Winkel}$ ist die bei einer Messung mit Schwerpunktsverlagerung zu berücksichtigende Masse. Bei einer Messung ohne Schwerpunktsverlagerung des Anhängers entfällt $m_{Winkel}$.

Damit die in der Regel leicht unterschiedlichen Durchmesser des Reifens bei der Antriebsrolle und bei der Straße berücksichtigt werden können, kann $k_{Reifen}$ normiert im Modul hinterlegt werden. Der Anwender kann jedoch jederzeit die Durchmesser neu vermessen und diese Daten auf das Modul übertragen, worauf dieses $k_{Reifen}$ gegebenenfalls anpassen kann. Dies ermöglicht die Berücksichtigung unterschiedlicher Zuladung und/oder unterschiedlichen Reifendrucks.

In der Formel kann rechnerisch eine höhere oder niedrigere Temperatur im Motor als wesentlicher Faktor ausgeglichen werden. Einerseits liefert das System zwar nur so konstant stabile Messergebnisse im angestrebten Toleranzbereich. Andererseits ist das System gleichzeitig geeignet bei verschiedenen Motortemperaturen in einem Bereich von vorzugsweise -10 °C bis 100 °C zuverlässige Messergebnisse zu liefern. Dies ist insbesondere deshalb wichtig, da der Anwender das System zum Wiegen seines Anhängers zu jeder Jahreszeit und an verschiedenen Plätzen der Erde benutzen können sollte.

Für den Fall, dass eine Schwerpunktsverlagerung des Anhängers bei der Messung erfolgt, wird diese in der Formel 1 durch $m_{Winkel}$ kompensiert. Um $m_{Winkel}$ (hier als $\Delta m$ bezeichnet) zu berechnen, ist das Modul geeignet die folgende Formel II in die Berechnung mit einzubeziehen:

$$\Delta m = -\, m * \frac{\tan\alpha * h}{r}$$

(Formel II)

wobei m die aus der Messung berechnete Masse des Anhängers ist, $\alpha$ der durch den Neigungssensor ermittelte Winkel der Neigung des Anhängers ist, h die Hälfte der Höhe des Anhängers ist und r der Abstand zwischen dem Mittelpunkt einer gedachten Achse der angetriebenen Räder und dem einer zweiten Achse oder eines Bugrads ist. h und r werden vom Anwender ausgemessen und diese Daten werden dem Modul zur Verfügung gestellt.

Zur Berechnung kann im Modul ein Filter integriert sein. Dieses sortiert beispielsweise zu hohe Werte (Ausreißer) des Phasenstroms ab einer vorgegebenen Obergrenze aus, trennt die Messwerte in Eich- und Keilfahrt, bildet einen jeweiligen Mittelwert und filtert danach alle Messwerte, die einen gewissen Abstand zum Mittelwert aufweisen, beispielsweise größer oder kleiner $\pm$ 20% vom vorher gebildeten Mittelwert, aus. Nach dieser Filterung der Messwerte werden alle gesammelten Daten verrechnet.

Als Datenübertragungssystem dient erfindungsgemäß bevorzugt ein LIN-Bus (Local Interconnect Network). Dieser wird oft auch im unteren Leistungs- und Kostenbereich in der Automobilindustrie eingesetzt und wird deshalb bevorzugt als kostengünstige Lösung im Antriebssystem der Erfindung verwendet, um zwischen verteilten Steuerungen (Motorelektronik und Zentraleinheit) zu kommunizieren. Weiter bevorzugt ist deshalb insbesondere ein Ein-Draht-Bus basierend auf der Versorgungsspannung in Kraftfahrzeugen. Des Weiteren kann zur Ansteuerung des LIN-Bus auf das UART-Protokoll eines Mikrocontrollers zurückgegriffen werden.

Es ist auch denkbar, dass der Neigungssensor z.B. auch im LIN-Netzwerk kommuniziert oder dass die LIN-Inet-Box die Funktionalität ggfls. zu einem Smartphone übernimmt.

Die Ansteuerung des Antriebssystems beruht bevorzugt auf einem Master/Slave-Konzept. Dieses Konzept ist dem Fachmann grundsätzlich bekannt. Der Master bestimmt, welche Nachricht zu welchem Zeitpunkt übertragen wird. Den Master bildet in diesem System die Steuerung. Es ist jedoch möglich, dass die Aufgaben der Steuerung bei einer Messung alleine vom Modul übernommen werden können.

Die Motoren sind als Slave realisiert. Beim Anlegen der Spannung an die Motorelektronik wird beispielsweise automatisch eine erste Adresse vergeben. Diese wird, um Kollisionen auf der Datenleitung zu vermeiden, vor Einschalten des zweiten Motors geändert. Im Master hinterlegte Schedule-Tabellen regeln den zeitgesteuerten Abruf der Daten. Das macht das Verhalten des Systems berechenbar, da der exakte Sendezeitpunkt aller Nachrichten bekannt ist.

Eine Drehzahlerhöhung wirkt sich auf eine Verkürzung der Messzeit aus. Aus diesem Grund verkleinert sich auch die Anzahl der verwendbaren Messwerte, wenn die Lin-Bus Daten in unverändert langen Intervallen abgefragt werden. Somit können eventuell Messspitzen oder Unebenheiten Einfluss auf das Messergebnis nehmen.

Um diese Einflüsse zu kontrollieren, ist es vorteilhaft, wenn die Steuerung oder das Modul die Drehzahl der Motoren bei einer Messung im Bereich von 250 bis 750 min$^{-1}$ steuern kann und eine Abfragerate von nicht weniger als 100 ms vorgeben kann. Es hat sich gezeigt, dass sich mit einer Abfragerate in Intervallen von 100 ms bei einer Drehzahl von 500 min-1 besonders genaue Messergebnisse erzielen lassen.

Das Modul kann in die Steuerung des Antriebssystems oder in ein externes Gerät integriert sein. Vorzugsweise ist das Modul in ein externes und zum Datenaustausch fähiges Gerät integriert. In dieser Ausführungsform können auf einfache Weise Daten mit dem Hersteller ausgetauscht werden. Dies erlaubt die Überwachung und Aktualisierung beispielsweise der Motor- und Getriebekenndaten oder der Steuerung der Motoren durch das Modul.

Dadurch kann das Modul zur Steuerung variabler, gegebenenfalls verbesserter Messungen oder verbesserten Filtern ausgerüstet werden, oder die Berechnung der Masse kann um weitere bekannte oder erfassbare Parameter ergänzt werden.

Damit der Energieaufwand durch eine Anhebung des Anhängers ermittelt werden kann, muss zunächst der Strombedarf bei Fahrt in der Ebene gemessen werden. Dieser kann aber durch äußere Bedingungen schwanken. Um Einflüsse durch den Benutzer oder den Ort der Messung auszuschließen, stellt die Erfindung einen mobilen Messplatz in Form von definierten Messstrecken zur Verwendung mit dem Antriebssystem bereit.

Eine erfindungsgemäße Messstrecke besteht aus zwei Abschnitten. Der erste Abschnitt besteht aus einem ebenen Flächengebilde, beispielsweise in der Form eines Bretts oder Lochblechs. Auf dieser Ebene wird die Eichfahrt durchgeführt. Der zweite Abschnitt besteht aus einem Keil. Dieser besitzt einen bekannten Winkel, der vom Benutzer im Modul eingegeben werden kann oder dort bereits hinterlegt ist. Die Messstrecke kann ganz einfach an einen Reifen heran geschoben werden.

Vorzugsweise ist die Messstrecke in Leichtbauweise aus Metall und/oder Kunststoff hergestellt, bevorzugt Kunststoff. Weiter bevorzugt können der erste und der zweite Abschnitt als separate Teilstücke mit einfachen Befestigungsmitteln reversibel miteinander verbunden werden, z.B. mittels einer Kunststofflasche am ersten Abschnitt, welche an einer korrespondierenden Öffnung am Keil eingesteckt werden kann. Somit ist die abzufahrende Strecke immer gleich, und es werden Einflüsse vermieden, die aus unterschiedlichen Untergründen resultieren könnten, auf die der Keil bei den Messungen gelegt wird. In einer Ausführungsform werden die Abschnitte klappbar bereitgestellt, beispielsweise mittels einer oder mehreren scharnierartigen Verbindungen. Die Oberfläche der Messstrecke sollte mit Verrippungen oder Aufrauhungen so gestaltet sein, dass der Reifen beim Überfahren immer Traktion hat und nicht zum Durchrutschen neigt.

Die zuverlässigsten Messergebnisse lassen sich erzielen, wenn die Länge des ersten Abschnitts und der Neigungswinkel des Keils gewisse Mindeststandards einhalten. Bevorzugt ist deshalb, dass die Länge des ersten Abschnitts nicht weniger als 40 cm lang ist. Der Neigungswinkel des keilförmigen zweiten Abschnitts liegt vorzugsweise in einem Bereich von 5° bis 15°.

Die Erfindung wird nachfolgend anhand eines Ausführungsbeispiels erläutert, das in den beigefügten Zeichnungen dargestellt ist. In diesen zeigen:

Figur 1 einen schematischen Aufbau des Antriebssystems an einem Anhänger;

Figur 2 schematische Darstellung einer erfindungsgemäßen Messstrecke;

Figur 3, am Beispiel eines einachsigen Anhängers mit Bugrad, die Position des Anhängers im angehobenen Zustand bei einer Messung ohne Neigungsveränderung des Anhängers; und

Figur 4, am Beispiel eines einachsigen Anhängers mit Bugrad, die Position des Anhängers im angehobenen Zustand bei einer Messung mit Neigungsveränderung des Anhängers.

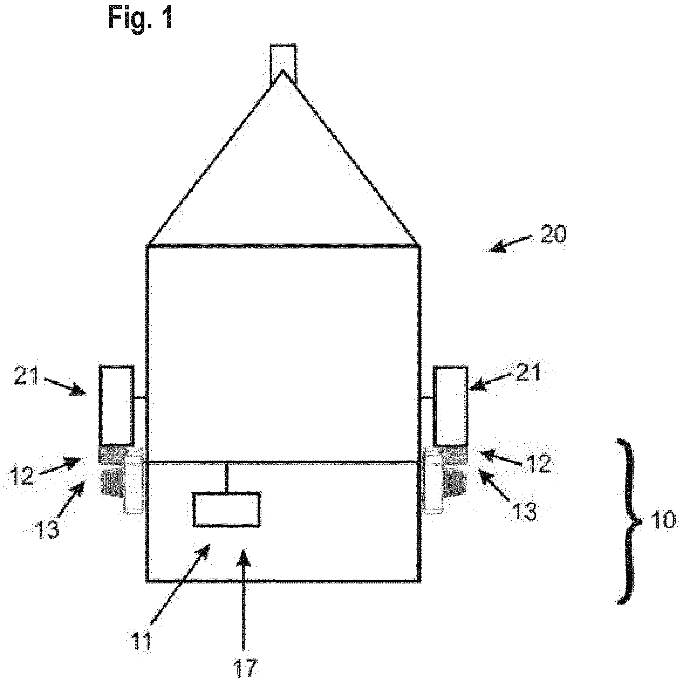

Figur 1 zeigt eine bevorzugte Ausführungsform des erfindungsgemäßen Antriebssystems 10 an einem einachsigen Anhänger mit Bugrad. Die Energie für dieses System wird von einer Batterie geliefert (nicht gezeigt). Eine Steuerung 11 übernimmt die Kommunikation mit den Antriebseinheiten 12 und dem Modul 17, hier als integrierter Bestandteil der Steuerung gezeigt.

Eine Antriebseinheit 12 weist einen Gleichstrommotor 13 zum Antreiben der Räder 21 des Anhängers 20 über eine Antriebsrolle (nicht dargestellt) auf. Ferner weist das Antriebssystem 10 Vorrichtungen 14, 15, 16 zur Ermittlung der Temperatur, Drehzahl und Stromaufnahme der Motoren sowie gegebenenfalls einen Neigungssensor 18 auf (nicht gezeigt). Unter "Stromaufnahme" wird dabei der Gesamtstrom verstanden, der den Motoren zugeführt wird, oder alternativ der Phasenstrom, der einer Wicklung zugeführt wird. Dabei kann auch der Phasenstrom aller Wicklungen des Motors erfasst und dann summiert oder gemittelt werden.

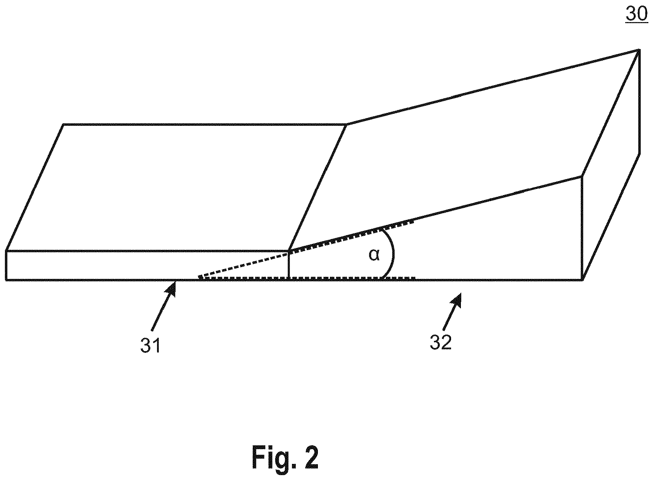

Wie in Figur 2 gezeigt, besteht die Messstrecke 30 aus einem ersten ebenen Abschnitt 31 und einem zweiten keilförmigen Abschnitt 32 mit bekanntem Steigungswinkel, hier als $\alpha$ gekennzeichnet. Zunächst kann der Anhänger manuell gesteuert werden, um den Anhänger an die Messstrecke zu rangieren. Diese Funktion kann von einer Fernbedienung übernommen werden. Dann werden Daten der Temperatur- und gegebenenfalls der Neigungssensoren bereitgestellt.

Bevorzugt wird die Messstrecke auf einer waagerechten Unterlage angeordnet. Grundsätzlich ist es für die Messung jedoch auch hinnehmbar, wenn die Unterlage leicht schräg ausgerichtet ist, solange sich die Ebenheit des Untergrunds über die Länge der Messstrecke nicht ändert. Aus der Neigungsdifferenz zwischen dem ersten und dem zweiten Abschnitt, der sich aus dem Steigungswinkel des Keils ergibt, kann auch dann auf das Gewicht des Anhängers geschlossen werden, wenn die Messstrecke insgesamt leicht schräg verläuft.

Bei vorgegebener Drehzahl werden die Standardeinstellungen übernommen und die Messung gestartet. Zuerst bleibt der Anhänger einige Sekunden am Anfang des ersten Abschnitts auf der Messstrecke stehen. In dieser Zeit werden die Temperatur der Motoren und gegebenenfalls die Neigung des Anhängers erfasst. Anschließend beginnen die Motoren sich bei vorgegebener Drehzahl zu bewegen und treiben die Räder entlang des ersten und zweiten Abschnitts an. Hierbei werden Stromaufnahme, Drehzahl und Temperatur der Motoren aufgezeichnet. Dies geschieht zeit- oder weggesteuert.

Nach Ablauf der Zeit bleibt der Anhänger am oberen Ende des Keils stehen, und der Neigungssensor ermittelt gegebenenfalls noch einmal über einige Sekunden die Neigung des Anhängers. Danach wird zum Ausgangspunkt zurückgefahren. Anschließend wird das Gewicht des Anhängers vom Modul berechnet.

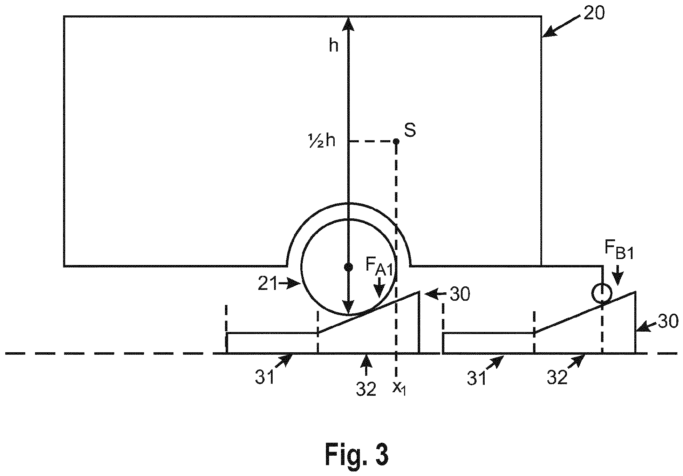

Figur 3 zeigt die Position des angehobenen Anhängers 20 bei erreichter Keilfahrt bei einer Messung ohne Neigungsveränderung des Anhängers. Damit sich die Neigung des Anhängers während der Messung nicht verändert, werden identische Messstrecken 30 für die angetriebenen Räder 21 und das Bugrad verwendet.

S kennzeichnet den Schwerpunkt des Anhängers und h die Höhe des Anhängers. Die Gesamtkraft F, die auf die Räder wirkt, ist in Form ihrer Teilkräfte $F_{A1}$, auf die angetriebenen Räder 21, und $F_{B1}$, auf das Bugrad, dargestellt.

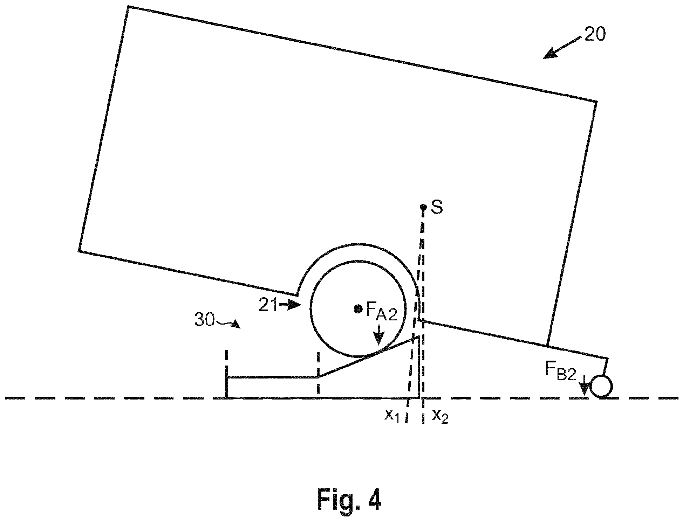

$X_1$ deutet den horizontalen Lagepunkt des Schwerpunkts S an. Wie im Vergleich in Figur 4 zu sehen ist, verlagert sich der Schwerpunkt S in horizontaler Richtung bei einer Messung mit Neigungsveränderung, hier angedeutet als horizontaler Lagepunkt $X_2$. Die Gesamtkraft F, die auf nun die Räder wirkt, ist in Form der Teilkräfte $F_{A2}$, auf die angetriebenen Räder 21, und $F_{B2}$, auf das Bugrad, dargestellt Diese Art der Messung erfordert nur Messstrecken 30 für die angetriebenen Räder 21. Die Neigung wird dann mittels eines Neigungssensors erfasst und bei der Berechnung der Masse des Anhängers 20 durch das Modul kompensiert.

In die Steuerung ist auch eine Funktion integriert, mit der der Anwender ähnlich wie beim automatischen Einparken eines PKWs den Vorgang abbrechen kann, beispielsweise indem eine bestimmte Taste gedrückt wird.

**Patentansprüche**

1. Antriebssystem (10) für einen Anhänger (20), umfassend eine Steuerung (11) und für jede Seite des Anhängers mindestens eine Antriebsvorrichtung (12) mit einem Gleichstrommotor (13), der die Räder (21) des Anhängers (20) antreiben kann, **dadurch gekennzeichnet, dass** das System

   - Vorrichtungen (14, 15, 16) zur Ermittlung der Stromaufnahme der Motoren (13) sowie
   - ein Modul (17) zur Berechnung der Masse des Anhängers (20) anhand eines Unterschieds der ermittelten Stromaufnahme der Motoren (13) auf einer ersten und einer zweiten Strecke mit unterschiedlicher Steigung unter Berücksichtigung der Drehzahl und Temperatur aufweist.

2. System nach Anspruch 1, wobei das System zusätzlich einen Neigungssensor (18) zur Ermittlung der Neigung des Anhängers aufweist.

3. System nach einem der vorhergehenden Ansprüche, **dadurch gekennzeichnet, dass** eine Vorrichtung zur Ermittlung der Temperatur der Motorsteuerung vorgesehen ist.

4.  System nach einem der vorhergehenden Ansprüche, **dadurch gekennzeichnet, dass** eine Vorrichtung zur Ermittlung der Drehzahl des Motors (13) vorgesehen ist.

5.  System nach einem der vorhergehenden Ansprüche, wobei das Modul (17) geeignet ist, die Motoren (13) für eine Messung zur Massenbestimmung zu steuern.

6.  System nach einem der vorangehenden Ansprüche, wobei das Modul (17) dazu geeignet ist:

    - die Räder (22) des Anhängers bei einer vorgegebenen Drehzahl mittels der Motoren (13) entlang einer Messstrecke, umfassend eine ebene Strecke und einen Auffahrtskeil mit bekannter Steigung, anzutreiben,
    - die Drehzahl, Temperatur und Stromaufnahme der Motoren (13) während der Fahrt zu messen,
    - gegebenenfalls die Neigung des Anhängers (20) zu ermitteln,
    - die Masse des Anhängers (20) anhand der Differenz zwischen der bei Fahrt entlang der Ebene gemessenen Stromaufnahme und der bei Fahrt entlang des Keils gemessenen Stromaufnahme unter Berücksichtigung der gemessenen Drehzahl und Temperatur und gegebenenfalls der Neigung des Anhängers (20) zu berechnen.

7.  System nach einem der vorangehenden Ansprüche 2 bis 6, wobei das Modul (17) dazu geeignet ist, die Neigung des Anhängers zu ermitteln und diese bei der Berechnung der Masse zu berücksichtigen.

8.  System nach einem der vorangehenden Ansprüche, wobei das System zur Datenübertragung einen LIN-Bus aufweist.

9.  System nach Anspruch 8, wobei der LIN-Bus über das UART-Protokoll eines Microcontrollers gesteuert wird.

10. System nach einem der vorangehenden Ansprüche wobei das Modul (17) zur Berechnung der Masse die folgende Formel I verwendet:

$$m = \frac{(I_{Keil} - I_{Ebene}) * (k_1 + (T - 25) * k_{Temp}) * i * \eta * k_{Reifen}}{g * \sin\alpha * r} + m_{Winkel}$$

(Formel I)

wobei m die berechnete Masse des Anhängers ist, $I_{Keil}$ die Stromaufnahme des Motors bei Keilfahrt ist, $I_{Ebene}$ die Stromaufnahme des Motors bei Fahrt entlang des ebenen Abschnitts ist, $k_1$ die Drehmomentkonstante des Motors ist, T die Temperatur des Motors ist, $k_{Temp}$ die Temperaturkonstante des Motors ist, i die Übersetzung des Getriebes ist, $\eta$ der Wirkungsgrad des Getriebes ist, $k_{Reifen}$ die Reifenkonstante ist, g die Normalbeschleunigung ist, $\alpha$ der Winkel des Keiles ist und r der Radius der Antriebsrolle ist und wobei $\Delta$m der Formel II $m_{Winkel}$ der Formel I entspricht:

$$\Delta m = - m * \frac{\tan\alpha * h}{r}$$
(Formel II)

wobei m die aus der Messung berechnete Masse des Anhängers ist, $\alpha$ der durch den Neigungssensor ermittelte Winkel der Neigung des Anhängers ist, h die Hälfte der Höhe des Anhängers ist und r der Abstand zwischen der Achse der angetriebenen Räder und einer zweiten Achse oder eines Bugrads ist.

11. System nach einem der vorangehenden Ansprüche, wobei das Modul (17) in die Steuerung (11) integriert ist.

12. System nach einem der vorangehenden Ansprüche, wobei das Modul (17) in ein externes Gerät integriert ist.

13. Kombination aus Messstrecke (30) und einem System (10) nach einem der vorangehenden Ansprüche, **dadurch gekennzeichnet, dass** die Messstrecke (30) einen ersten ebenen Abschnitt (31) und einen zweiten keilförmigen Abschnitt (32) mit bekannter Steigung aufweist.

14. Kombination nach Anspruch 13, wobei der erste Abschnitt (31) und der zweite Abschnitt (32) als separate Teile vorliegen und Mittel zur reversiblen Verbindung aufweisen.

**15.** Kombination nach Anspruch 13 oder 14, wobei die Messstrecke aus Kunststoff hergestellt ist.

**16.** Kombination nach einem der Ansprüche 13 bis 15, wobei der erste Abschnitt mindestens 0,4 m lang ist.


**Claims**

**1.** A drive system (10) for a trailer (20), comprising a control unit (11) and, for each side of the trailer, at least one drive device (12) having a direct current motor (13) that is adapted to drive the wheels (21) of the trailer (20), **characterized in that** the system includes

- devices (14, 15, 16) for determining the current consumption of the motors (13), and
- a module (17) for calculating the mass of the trailer (20) based on a difference in the current consumption determined for the motors (13) on a first and a second distance having different gradients, taking into account the speed and the temperature.

**2.** The system according to claim 1, wherein the system additionally includes an inclination sensor (18) for determining the inclination of the trailer.

**3.** The system according to either of the preceding claims, **characterized in that** a device is provided for determining the temperature of the motor control unit.

**4.** The system according to any of the preceding claims, **characterized in that** a device is provided for determining the speed of the motor (13).

**5.** The system according to any of the preceding claims, wherein the module (17) is suitable to control the motors (13) for a measurement for mass determination.

**6.** The system according to any of the preceding claims, wherein the module (17) is suitable to:

- drive the wheels (22) of the trailer at a predefined speed by means of the motors (13) along a measuring section comprising a plane section and a drive-up wedge with a known gradient,
- measure the speed, temperature and current consumption of the motors (13) while travelling,
- if required, determine the inclination of the trailer (20),
- calculate the mass of the trailer (20) based on the difference between the current consumption measured when travelling along the plane and the current consumption measured when travelling along the wedge, taking into account the measured speed and temperature and, if applicable, the inclination of the trailer (20).

**7.** The system according to any of the preceding claims 2 to 6, wherein the module (17) is suitable to determine the inclination of the trailer and to take it into account in calculating the mass.

**8.** The system according to any of the preceding claims, wherein the system includes a LIN bus for data transfer.

**9.** The system according to claim 8, wherein the LIN bus is controlled through the UART protocol of a microcontroller.

**10.** The system according to any of the preceding claims, wherein the module (17) uses the following formula I to calculate the mass:

$$m = \frac{(I_{wedge} - I_{plane}) * (k_1 + (T - 25) * k_{temp}) * i * \eta * k_{tire}}{g * \sin\alpha * r} + m_{angle}$$

(formula I)

where m is the calculated mass of the trailer, $I_{wedge}$ is the current consumption of the motor when driving on the wedge, $I_{plane}$ is the current consumption of the motor when driving along the plane section, $k_1$ is the torque constant of the motor, T is the temperature of the motor, $k_{temp}$ is the temperature constant of the motor, i is the gear ratio of the transmission, $\eta$ is the efficiency of the transmission, $k_{tire}$ is the tire constant, g is the normal acceleration, $\alpha$ is the angle of the wedge, and r is the radius of the drive roller, and where $\Delta m$ of formula II corresponds to $m_{angle}$ of formula I:

$$\Delta m = - m * \frac{\tan \alpha * h}{r} \quad \text{(formula II)}$$

where m is the mass of the trailer calculated from the measurement, $\alpha$ is the angle of the inclination of the trailer determined by the inclination sensor, h is half the height of the trailer, and r is the distance between the axle of the driven wheels and a second axle or a jockey wheel.

11. The system according to any of the preceding claims, wherein the module (17) is integrated in the control unit (11).

12. The system according to any of the preceding claims, wherein the module (17) is integrated in an external apparatus.

13. A combination of a measuring section (30) and a system (10) according to any of the preceding claims, **characterized in that** the measuring section (30) includes a first plane portion (31) and a second wedge-shaped portion (32) having a known gradient.

14. The combination according to claim 13, wherein the first portion (31) and the second portion (32) are provided as separate parts and include means for a reversible connection.

15. The combination according to claim 13 or 14, wherein the measuring section is made of plastic.

16. The combination according to any of claims 13 to 15, wherein the first portion is at least 0.4 m long.

**Revendications**

1. Système d'entraînement (10) pour une remorque (20), comprenant une commande (11) et pour chaque côté de la remorque au moins un dispositif d'entraînement (12) présentant un moteur à courant continu (13) qui est apte à entraîner les roues (21) de la remorque (20), **caractérisé en ce que** le système présente

   - des dispositifs (14, 15, 16) pour la détermination de la consommation de courant des moteurs (13), et
   - un module (17) pour le calcul de la masse de la remorque (20) sur la base d'une différence des consommations de courant déterminées des moteurs (13) sur un premier et un deuxième trajet à inclinaison différente en tenant compte du régime et de la température.

2. Système selon la revendication 1, le système présentant en outre un capteur d'inclinaison (18) pour la détermination de l'inclinaison de la remorque.

3. Système selon l'une des revendications précédentes, **caractérisé en ce qu'**il est prévu un dispositif pour la détermination de la température de la commande moteur.

4. Système selon l'une des revendications précédentes, **caractérisé en ce qu'**il est prévu un dispositif pour la détermination du régime du moteur (13).

5. Système selon l'une des revendications précédentes, le module (17) étant apte à commander les moteurs (13) pour une mesure pour une détermination de la masse.

6. Système selon l'une des revendications précédentes, le module (17) étant apte :

   - à entraîner les roues (22) de la remorque à un régime prédéterminé au moyen des moteurs (13) le long d'un trajet de mesure comprenant un trajet plan et une cale de montée à inclinaison connue,
   - à mesurer le régime, la température et la consommation de courant des moteurs (13) pendant la marche,
   - à déterminer, le cas échéant, l'inclinaison de la remorque (20),

- à calculer la masse de la remorque (20) sur la base de la différence entre la consommation de courant mesurée lors de la marche le long de la surface plane et la consommation de courant mesurée lors de la marche le long de la cale en tenant compte du régime et de la température tels que mesurés et, le cas échéant, de l'inclinaison de la remorque (20).

7. Système selon l'une des revendications 2 à 6, le module (17) étant apte à déterminer l'inclinaison de la remorque et à tenir compte de celle-ci lors du calcul de la marche.

8. Système selon l'une des revendications précédentes, le système présentant un bus LIN pour la transmission de données.

9. Système selon la revendication 8, le bus LIN étant commandé par le protocole UART d'un microcontrôleur.

10. Système selon l'une des revendications précédentes, le module (17) utilisant pour le calcul de la masse la formule I suivante :

$$m = \frac{(I_{cale} - I_{surface\ plane}) * (k_1 + (T - 25) * k_{temp}) * i * \eta * k_{pneu}}{g * \sin\alpha * r} + m_{angle}$$

(formule I)

m étant la masse calculée de la remorque, $I_{cale}$ la consommation de courant du moteur lors de la marche sur la cale, $I_{surface\ plane}$ la consommation de courant du moteur lors de la marche le long du tronçon plan, $k_1$ la constante du couple du moteur, T la température du moteur, $k_{temp}$ la constante de température du moteur, i le rapport de transmission de la transmission, $\eta$ le rendement de la transmission, $k_{pneu}$ la constante de pneu, g l'accélération normale, $\alpha$ l'angle de la cale, et r le rayon du rouleau d'entraînement, et $\Delta m$ de la formule II correspondant à $m_{angle}$ de la formule I :

$$\Delta m = -m * \frac{\tan\alpha * h}{r}$$

(formule II)

m étant la masse de la remorque calculée à partir de la mesure, $\alpha$ l'angle de l'inclinaison de la remorque déterminé par le capteur d'inclinaison, h la moitié de la hauteur de la remorque, et r la distance entre l'axe des roues entraînées et un deuxième axe ou un axe de roue avant.

11. Système selon l'une des revendications précédentes, le module (17) étant intégré dans la commande (11).

12. Système selon l'une des revendications précédentes, le module (17) étant intégré dans un appareil externe.

13. Combinaison d'un trajet de mesure (30) et d'un système (10) selon l'une des revendications précédentes, **caractérisée en ce que** le trajet de mesure (30) présente un premier tronçon plan (31) et un deuxième tronçon (32) en forme de cale à pente connue.

14. Combinaison selon la revendication 13, le premier tronçon (31) et le deuxième tronçon (32) étant présents sous forme de pièces séparées et présentant des moyens pour un raccordement réversible.

15. Combinaison selon la revendication 13 ou 14, le trajet de mesure étant réalisé en matière plastique.

16. Combinaison selon l'une des revendications 13 à 15, le premier tronçon présentant une longueur d'au moins 0,4 m.

# Fig. 1

**Fig. 2**

EP 3 128 299 B1

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070193795 A

- EP 2169364 A